(19) Europäisches Patentamt
European Patent Office
Office européen des brevets

(11) **EP 2 430 690 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **10718594.4**

(22) Anmeldetag: **10.05.2010**

(51) Int Cl.:
*H01M 4/36* [(2006.01)]

(86) Internationale Anmeldenummer:
**PCT/EP2010/056358**

(87) Internationale Veröffentlichungsnummer:
**WO 2010/130684 (18.11.2010 Gazette 2010/46)**

(54) **VERBUNDMATERIAL ENTHALTEND EIN GEMISCHTES LITHIUM-METALLOXID**

COMPOSITE MATERIAL CONTAINING A MIXED LITHIUM-METAL OXIDE

MATÉRIAU COMPOSITE COMPORTANT UN MÉLANGE D'OXYDE MÉTALLIQUE AU LITHIUM

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.05.2009 DE 102009020832**

(43) Veröffentlichungstag der Anmeldung:
**21.03.2012 Patentblatt 2012/12**

(73) Patentinhaber: **Johnson Matthey PLC London EC4A 4AB (GB)**

(72) Erfinder:
- **BAUER, Peter**
  **84172 Buch am Erlbach (DE)**
- **TRAN, Nicolas**
  **85354 Freising (DE)**
- **VOGLER, Christian**
  **89563 Moosburg (DE)**

(74) Vertreter: **Gleave, Robert James**
**Johnson Matthey Public Limited Company**
**Intellectual Property Department**
**Blount's Court Road**
**Sonning Common**
**Reading, Berkshire RG4 9NH (GB)**

(56) Entgegenhaltungen:
EP-A1- 1 722 428          WO-A1-2008/067677
WO-A1-2008/067677     WO-A1-2010/012076
WO-A2-2006/120332     JP-A- 2004 014 340
JP-A- 2006 302 671       US-A1- 2002 195 591
US-A1- 2007 160 752

- KIM ET AL: "Carbon coatings with olive oil, soybean oil and butter on nano-LiFePO4", JOURNAL OF POWER SOURCES, ELSEVIER SA, CH, vol. 167, no. 2, 17 April 2007 (2007-04-17), pages 524-528, XP022032237, ISSN: 0378-7753, DOI: 10.1016/J.JPOWSOUR.2007.01.097

EP 2 430 690 B1

**Beschreibung**

Die vorliegende Erfindung betrifft ein Verbundmaterial enthaltend Partikel eines gemischten Lithium-Metalloxids, die bereichsweise mit nicht kristallinem Pyrolysekohlenstoff beschichtet sind sowie Partikel aus kristallinem elementarem Kohlenstoff, die ebenfalls bereichsweise mit nicht kristallinem Pyrolysekohlenstoff beschichtet sind, wobei der kristalline elementare Kohlenstoff kein VGCF (vapor grown carbon fiber) Kohlenstoff ist. Weiter betrifft die vorliegende Erfindung ein Verfahren zur Herstellung eines derartigen Verbundmaterials und dessen Verwendung in Elektroden von Sekundärlithiumionenbatterien.

Dotierte und nicht-dotierte gemischte Lithium-Metalloxide finden in letzter Zeit besondere Beachtung als Elektrodenmaterialien in sogenannten "Lithiumionenbatterien".

Als Kathodenmaterial werden beispielsweise seit den Arbeiten von Goodenough et al. (US 5 910 382 A) nicht-dotierte oder dotierte gemischte Lithiumübergangsmetallphosphate insbesondere als Kathodenmaterial in Elektroden von Sekundärlithiumionenbatterien verwendet. Zur Herstellung der Lithiumübergangsmetallphosphate werden sowohl Festkörpersynthesen wie auch sog. Hydrothermalsynthesen aus wässriger Lösung vorgeschlagen. Als Dotierungskationen sind aus dem Stand der Technik mittlerweile nahezu sämtliche Metall- und Übergangsmetallkationen bekannt.

So beschreibt die WO 02/099913 A1 ein Verfahren zur Herstellung von $LiMPO_4$, wobei M neben Eisen ein oder mehrere Übergangsmetallkation(en) der ersten Übergangsmetallserie des Periodensystems der Elemente ist(sind), um phasenreines ggf. dotiertes $LiMPO_4$ herzustellen.

Die EP 1 195 838 A2 beschreibt die Herstellung von Lithiumübergangsmetallphosphaten, insbesondere $LiFePO_4$, mittels eines Festkörperverfahrens, wobei typischerweise Lithiumphosphat und Eisen(II)phosphat gemischt und bei Temperaturen von ungefähr 600 °C gesintert werden.

Weitere Verfahren zur Herstellung insbesondere von Lithiumeisenphosphat sind beispielsweise im Journal of Power Sources 119 bis 121 (2003) 247 bis 251, der JP 2002-151082 A sowie in der DE 103 53 266 A1 beschrieben worden. Üblicherweise wird das so erhaltene dotierte bzw. nicht-dotierte Lithiumübergangsmetallphosphat mit Leitruß versetzt und zu Kathodenformulierungen verarbeitet. So beschreiben die EP 1 193 784 A1, die EP 1 193 785 A1 sowie die EP 1 193 786 A1 sog. Kohlenstoffkompositmaterialien aus $LiFePO_4$ und amorphem Kohlenstoff, der bei der Herstellung des Eisenphosphats aus Eisensulfat, Natriumhydrogenphosphat auch als Reduktionsmittel für verbleibende Reste an $Fe^{3+}$ im Eisensulfat sowie zur Verhinderung der Oxidation von $Fe^{2+}$ zu $Fe^{3+}$ dient. Die Zugabe von Kohlenstoff soll außerdem die Leitfähigkeit des Lithiumeisensphosphataktivmaterials in der Kathode erhöhen. So gibt insbesondere die EP 1 193 786 A1 an, dass Kohlenstoff einen Gehalt von nicht weniger als 3 Gew.-% in dem Lithiumeisenphosphat-Kohlenstoffverbundmaterial enthalten sein muss, um die nötige Kapazität und entsprechende Zykluscharakteristika des Materials zu erreichen.

Das EP 1 049 182 B1 schlägt vor, ähnliche Probleme durch die Beschichtung von Lithiumeisenphosphat mit amorphem Kohlenstoff zu erreichen. Die WO 2008/067677 A1 offenbart die Herstellung von LiFeP04 mit einer Schicht aus Pyrolysekohlenstoff. Die Partikel werden anschließend in einer Kugelmühle vermahlen. Danach wird eine weitere Schicht an Pyrolysekohlenstoff aufgebracht.

Eine aktuelle Übersicht über Anodenmaterialien in sogenannten Lthiumionenbatterien findet sich z.B. in: Bruce et al., Angew.Chem.Int.Ed. 2008, 47, 2930-2946.

Als Anodenmaterial wird seit einiger Zeit als Ersatz für Graphit die Verwendung von dotierten und nicht-dotierten Lithiumtitanaten, insbesondere Lithiumtitanat $Li_4Ti_5O_{12}$ (Lithium-Titan-Spinell) in wiederaufladbaren Lithiumionenbatterien beschrieben.

Die Vorteile von $Li_4Ti_5O_{12}$ gegenüber Graphit sind insbesondere dessen bessere Zyklenbeständigkeit, seine bessere thermische Belastbarkeit sowie die höhere Betriebssicherheit. $Li_4Ti_5O_{12}$ weist eine relativ konstante Potentialdifferenz von 1,55 V gegenüber Lithium auf und erreicht mehrere 1000 Lade- und Entladezyklen mit einem Kapazitätsverlust von <20 %.

Damit zeigt Lithiumtitanat ein deutlich positiveres Potential als Graphit, der bislang üblicherweise in wiederaufladbaren Lithium-Ionen-Batterien als Anode verwendet wird.

Allerdings ergibt sich durch das höhere Potential auch eine niedrigere Spannungsdifferenz. Zusammen mit einer verringerten Kapazität von 175 mAh/g verglichen mit 372 mAh/g (theoretischer Wert) von Graphit führt dies zu einer deutlich niedrigeren Energiedichte im Vergleich zu Lithium-Ionen-Batterien mit Graphitanoden.

Allerdings weist $Li_4Ti_5O_{12}$ eine hohe Lebensdauer auf und ist ungiftig und daher auch nicht als umweltgefährdend einzustufen.

Wie schon vorstehend gesagt, wird seit kurzem in Lithium-ionen-Batterien $LiFePO_4$ als Kathodenmaterial verwendet, so dass in einer Kombination von $Li_4Ti_5O_{12}$ und $LiFePO_4$ eine Spannungsdifferenz von 2 V erzielt werden kann.

Die Herstellung von Lithiumtitanat $Li_4Ti_5O_{12}$ ist in vielerlei Hinsicht ausführlich beschrieben. Üblicherweise wird $Li_4Ti_5O_{12}$ mittels einer Festkörperreaktion zwischen einer Titanverbindung, typischerweise $TiO_2$, mit einer Lithiumverbindung, typischerweise $Li_2CO_3$, bei hohen Temperaturen von über 750 °C erhalten (US 5 545 468 A). Dieser Hochtemperaturkalzinierschritt ist anscheinend nötig, um relativ reines, gut kristallisierbares $Li_4Ti_5O1_2$ zu erhalten, was jedoch den Nachteil mit sich bringt, dass zu grobe Primärpartikel erhalten werden und eine teilweise Versinterung des Materials auftritt. Das so erhaltene Produkt muss daher aufwendig vermahlen werden, was zu weiteren Verunreinigungen führt. Typischerweise entstehen durch die hohen Temperaturen auch oftmals Nebenprodukte wie Rutil bzw. Reste von Anatas, die im Produkt verbleiben (EP 1 722 439 A1).

Ebenso werden Sol-Gel-Verfahren für die Herstellung von $Li_4Ti_5O_{12}$ beschrieben (DE 103 19 464 A1). Dabei werden Organotitanverbindungen wie beispielsweise Titantetraisopropoxid oder Titantetrabutylat in wasserfreien Medien mit beispielsweise Lithiumacetat oder Lithiummethoxid zu $Li_4Ti_5O_{12}$ umgesetzt. Die Sol-Gel-Methoden erfordern jedoch die Verwendung von Titanausgangsverbindungen die weit teurer als $TiO_2$ sind und deren Titangehalt geringer ist als in $TiO_2$, so dass eine Herstellung von Lithiumtitanspinell mittels der Sol-Gel-Methode üblicherweise unwirtschaftlich ist, zumal das Produkt nach der Sol-Gel-Reaktion noch kalziniert werden muss, damit es kristallin wird.

Außerdem werden Herstellungsverfahren mittels Flammenpyrolyse (Flame Spray Pyrolysis) vorgeschlagen (Ernst, F.O. et al. Materials Chemistry and Physics 2007, 101(2-3) S. 372-378) sowie so genannte "Hydrothermalverfahren" in wasserfreien Medien (Kalbac, M. et al., Journal of Solid State Electrochemistry 2003, 8(1) S. 2-6).

Weitere Möglichkeiten Lithiumtitanat herzustellen, insbesondere mittels Festkörperverfahren, sind beispielsweise in der US 2007/0202036 A1 sowie dem US 6 645 673 B2 beschrieben, weisen jedoch die schon vorstehend beschriebenen Nachteile auf, dass Verunreinigungen wie beispielsweise Rutil bzw. Reste von Anatas vorliegen, sowie weitere Zwischenprodukte der Festkörperreaktion wie $Li_2TiO_3$ etc.

Weiter wurde neben der Herstellung von nicht-dotiertem $Li_4Ti_5O_{12}$ auch die Herstellung und Eigenschaften von Al-, Ga- und Codotiertem $Li_4Ti_5O_{12}$ beschrieben (S. Huang et al. J. Power Sources 165 (2007), S. 408 - 412).

Die heutigen zum Einsatz insbesondere auch in Automobilen vorgesehenen wiederaufladbaren Lithiumionenbatterien haben jedoch hohe Anforderungen, insbesondere im Bezug auf ihre Entladungszyklen sowie ihre Kapazität. Die bisher vorgeschlagenen Materialien bzw. Materialmischungen erreichen jedoch bislang noch nicht die nötige Elektrodendichte, da sie nicht die nötige Pulverpressdichte aufweisen. Die Pressdichte des Materials kann dabei in etwa mit der Elektrodendichte bzw. der Dichte des sogenannten Aktivmaterials korreliert werden und weiter auch die Batteriekapazität. Je höher die Pressdichte ist, desto höher ist auch die Kapazität der Batterie.

Aufgabe der vorliegenden Erfindung war es daher, ein verbessertes Elektrodenmaterial für Sekundärlithiumionenbatterien bereitzustellen, das gegenüber den Materialien des Standes der Technik insbesondere eine verbesserte Pressdichte aufweist.

Die Aufgabe der vorliegenden Erfindung wird durch ein Verbundmaterial gelöst, enthaltend bereichsweise mit einer Pyrolysekohlenstoffbeschichtung versehene Partikel eines gemischten Lithium-Metalloxids und bereichsweise mit einer Beschichtung aus Pyrolysekohlenstoff versehenen Partikel aus elementarem Kohlenstoff.

Überraschenderweise weist das erfindungsgemäße Verbundmaterial Pressdichten auf, die gegenüber den üblichen Elektrodenmaterialien des Standes der Technik eine Verbesserung von mindestens 10 % aufweisen.

Durch die Erhöhung der Pressdichte wird damit auch eine höhere Elektrodendichte erreicht, so dass sich die Kapazität der Batterie unter Verwendung des erfindungsgemäßen Verbundmaterials als Aktivmaterial in der Kathode und/oder in der Anode einer Sekundärlithiumionenbatterie auch ca. um den Faktor 5 % erhöht.

Bei dem gemischten Lithium-Metalloxid handelt es sich erfindungsgemäß um (i) ein dotiertes oder nicht-dotiertes Lithiumübergangsmetallphosphat, wobei das Übergangsmetall des Lithiumübergangsphosphats Fe, Co, Mn oder Ni ist, oder (ii) um ein dotiertes oder nicht-dotiertes Lithiumtitanoxid.

Der Begriff "elementarer Kohlenstoff" bedeutet vorliegend, dass Partikel aus reinem Kohlenstoff, die sowohl amorph wie auch kristallin sein können, jedoch diskrete Partikel (in Form von Kugeln, wie zB. Kugelgraphit, Flocken, Körner etc) bilden, verwendet werden können. Beispiele für amorphen Kohlenstoff sind z.B. Ketjenblack, Acetylenschwarz, Ruß etc. Jedoch wird im Rahmen der vorliegenden Erfindung ein kristallines elementares Kohlenstoffallotrop verwendet, wobei der kristalline elementare Kohlenstoff kein VGCF (vapor grown carbon fiber) Kohlenstoff ist. Beispiele hierfür sind Graphit, Kohlenstoffnanoröhrchen (sog. Kohlenstoffnanotubes) sowie die Verbindungsklasse der Fullerene und Mischungen davon.

Der Begriff "Pyrolysekohlenstoff" bezeichnet eine durchgehende, kontinuierliche Schicht aus nicht kristallinem Kohlenstoff, die keine diskreten Partikel aus Kohlenstoff aufweist. Der Pyrolysekohlenstoff wird durch Erhitzen, d.h. Pyrolyse bei Temperaturen von unter 1500°C, bevorzugt unter 1200°C und weiter bevorzugt von unter 1000°C und am meisten bevorzugt von unter 800°C von Vorläuferverbindungen gewonnen. Bei höheren Temperaturen von insbesondere >1000°C tritt oftmals eine Agglomerierung der Partikel an den gemischten Lithium-Metalloxiden durch sogenannte "Versinterung" auf, was typischerweise zu einer schlechten Strombelastbarkeit des erfindungsgemäßen Verbundmaterials führt. Wichtig ist vorliegend nur, dass kein kristalliner geordneter synthetischer Graphit entsteht, dessen Herstellung Temperaturen von mindestens 2800°C bei Normaldruck erfordert.

Typische Vorläuferverbindungen sind beispielsweise Kohlenhydrate wie Laktose, Sucrose, Glucose, Polymere wie beispielsweise Polystyrol-Butadien-Block-Copolymere, Polyethylen, Polypropylen, aromatische Verbindungen wie Benzol, Anthracen, Toluol, Perylen sowie alle weiteren dafür dem Fachmann an sich bekannten geeigneten Verbindungen.

Die genaue Temperatur hängt auch vom zu beschichtenden spezifischen gemischten Lithium-Metalloxid ab, da sich z.B. Lithium-Übergangsmetallphosphate bei Temperaturen um 800°C oftmals schon zu Phosphiden zersetzen, wohingegen "klassische" Lithium-Metalloxide oft auch bis zu 2000°C ohne Zersetzung erhitzt werden können.

In bevorzugten Ausführungsformen der vorliegenden Erfindung ist das gemischte Lithium-Metalloxid des erfindungsgemäßen Verbundmaterials ein Lithiumübergangsmetallphosphat.

Der Begriff "ein Lithiumübergangsmetallphosphat" bedeutet im Rahmen dieser Erfindung, dass das Lithiumübergangsmetallphosphat sowohl dotiert oder nicht-dotiert vorliegt.

"Nicht-dotiert" heißt, dass reines, insbesondere phasenreines Lithiumübergangsmetallphosphat verwendet wird. Das Übergangsmetall ist dabei bevorzugt ausgewählt aus der Gruppe bestehend aus Fe, Co, Mn oder Ni davon, weist also die Formeln $LiFePO_4$, $LiCoPO_4$, $LiMnPO_4$ bzw. $LiNiPO_4$ auf.

Unter einem dotierten Lithiumübergangsmetallphosphat wird eine Verbindung der Formel $LiM'_yM''_xPO_4$ verstanden, wobei M" = Fe, Co, Ni oder Ni ist, M' von M" verschieden ist und wenigstens ein Metallkation darstellt aus der Gruppe bestehend aus Co, Ni, Mn, Fe, Nb, Ti, Ru, Zr, B, Mg, Ca, Cu, Cr oder Kombinationen davon, bevorzugt aber Co, Ni, Mn, Fe, Ti, B, Mg und Nb darstellt, x ist eine Zahl < 1 und > 0,01 und y ist eine Zahl > 0,001 und < 0,99. Typische bevorzugte Verbindungen sind z.B. $LiNb_yFe_xPO_4$, $LiMg_yFe_xPO_4$, $LiB_yFe_xPO_4$, $LiMn_yFe_xPO_4$, $LiCo_yFe_xPO_4$, $LiMn_zCo_yFe_xPO_4$ mit $0 \le x, y, z \le 1$)

In noch weiteren bevorzugten Ausführungsformen der vorliegenden Erfindung ist das gemischte Lithium-Metalloxid des erfindungsgemäßen Verbundmaterials ein Lithium-Titanoxid.

Unter dem Begriff "ein Lithium-Titanoxid" werden vorliegend alle dotierten oder nicht-dotierten Lithium-Titan-Spinelle (sogenannte "Lithiumtitanate") vom Typ $Li_{1+x}Ti_{2-x}O_4$ mit $0 \le x \le 1/3$ der Raumgruppe Fd3m und generell auch sämtliche gemischten Lithium-Titan-Oxide der generischen Formel $Li_xTi_yO$ ($0 \le x, y \le 1$) verstanden.

Wie schon vorstehend ausgeführt, ist das im erfindungsgemäßen Verbundmaterial eingesetzte gemischte Lithium-Titanoxid in bevorzugten Weiterbildungen mit wenigstens einem weiteren Metall dotiert, was zu einer weiter erhöhten Stabilität und Zyklenbeständigkeit bei Verwendung des dotierten Lithium-Ttitanoxids als Anode führt. Insbesondere wird dies mit dem Einbau von zusätzlichen Metallionen, bevorzugterweise Al, B, Mg, Ga, Fe, Co, Sc, Y, Mn, Ni, Cr, V, Sb, Bi bzw. mehrerer dieser Ionen in die Gitterstruktur erzielt.

Die dotierten und nicht-dotierten Lithiumtitanspinelle sind bevorzugt rutilfrei.

Die Dotierungsmetallionen sind bei allen vorgenannten gemischten Lithium-Metalloxiden bevorzugt in einer Menge von 0,05 bis 3 Gew.-%, bevorzugt 1-3 Gew.-%, bezogen auf das gesamte gemischte Lithium-Metalloxid vorhanden. Die Dotierungsmetallkationen belegen entweder die Gitterplätze des Metalls oder des Lithiums. Ausnahmen davon sind gemischte Fe, Co, Mn, Ni Mischphosphate, die mindestens zwei der vorgenannten Elemente enthalten, bei denen auch größere Mengen an Dotierungsmetallkationen vorhanden sein können, im Extremfall bis 50 Gew.-%.

Mit einer monomodalen Partikelgrößenverteilung beträgt der $D_{10}$-Wert des Verbundmaterials vorzugsweise $\le$ 0,19, der $D_{50}$-Wert bevorzugt $\le 0,43$ und der $D_{90}$-Wert $\le 2,15$ $\mu m$.

Eine kleine Teilchengröße des erfindungsgemäßen Verbundmaterials führt beim Einsatz als Elektrode in einer Batterie wie schon gesagt zu einer höheren Stromdichte und auch zu einer besseren Zyklenbeständigkeit. Natürlich kann das erfindungsgemäße Verbundmaterial auch noch weiter fein vermahlen werden, sofern dies für eine spezifische Anwendung nötig sein sollte. Der Mahlvorgang wird dabei mit dem Fachmann an sich bekannten Methoden durchgeführt.

Die Schichtdicke der der Beschichtung aus nicht kristallinem Pyrolysekohlenstoff beträgt vorteilhafterweise 2-15, bevorzugt 3-10 und ganz besonders bevorzugt 5-7 nm, wobei die Schichtdicke insbesondere durch die Ausgangskonzentration an Vorläufermaterial, die genaue Temperaturwahl und Dauer des Erhitzens gezielt eingestellt werden kann.

In besonders bevorzugten Ausführungsformen der vorliegenden Erfindung befindet sich die Beschichtung aus nicht kristallinem Pyrolysekohlenstoff auf der gesamten Oberfläche sowohl der Partikel des gemischten Lithium-Metalloxids und der Partikel aus elementarem Kohlenstoff. Die Ausbildung der Schicht aus nicht kristallinem Pyrolysekohlenstoff auf den Partikeln aus elementarem

Kohlenstoff ist beispielsweise durch TEM (Transmissionselektronenmikroskopie) Methoden nachweisbar.

In ganz besonders bevorzugten Ausführungsformen beträgt die BET-Oberfläche (gemäß nach DIN 66134) des gemischten Lithium-Metalloxids $\le$ 20 m²/g, ganz besonders bevorzugt $\le$ 15 m²/g und am meisten bevorzugt $\le$ 12 m²/g. Geringe BET-Oberflächen haben den Vorteil, dass die Pressdichte und damit die Elektrodendichte, folglich auch die Kapazität einer Batterie erhöht wird.

Überraschenderweise weist nun das erfindungsgemäße Verbundmaterial trotz der zumindest partiellen Beschichtung der Partikel aus gemischtem Lithium-Metalloxid mit nicht kristallinem Pyrolysekohlenstoff, was eine höhere BET Oberfläche und damit eine geringe Pressdichte vermuten ließe, eine hohe Pressdichte von $\ge$ 2,0 g/cm³, bevorzugt im Bereich von 2,0 bis 3,3 g/cm³ auf, noch mehr bevorzugt im Bereich von 2,2 bis 2,7 g/cm³. Durch diese Pressdichte resultieren deutlich höhere Elektrodendichten in einer Elektrode enthaltend das erfindungsgemäße Verbundmaterial als bei Materialien des Standes der Technik, so dass auch die Kapazität einer Batterie bei Verwendung einer derartigen Elektrode steigt.

Der Pulverwiderstand des erfindungsgemäßen Verbundmaterials beträgt bevorzugt < 35 $\Omega$/cm, ganz besonders

bevorzugt < 33 $\Omega$/cm, noch bevorzugter < 30 $\Omega$/cm, wodurch sich auch ein Batterie enthaltend eine derartige Elektrode auch durch eine besonders hohe Strombelastbarkeit auszeichnet.

Der gesamte Kohlenstoffgehalt des erfindungsgemäßen Verbundmaterials (also die Summe aus nicht kristallinem Pyrolysekohlenstoff und den Partikeln aus elementarem Kohlenstoff) beträgt bevorzugt < 3 Gew.-% bezogen auf die Gesamtmasse an Verbundmaterial, noch bevorzugter < 2,5 Gew.-%.

In weiter bevorzugten Ausführungsformen beträgt der Gesamtkohlenstoffgehalt ungefähr 2,2 $\pm$ 0,2 Gew.-%. Die Verhältnisse von elementarem Kohlenstoff zu Pyrolysekohlenstoff liegen in einem Bereich von 3:1 bis 1:3. Ganz besonders bevorzugt ist das Verhältnis 1:1, sodass bei einem Gesamtkohlenstoffgehalt von 2,2 Gew.-% bevorzugterweise 50 %, d.h. 1,1 $\pm$ 0,1 Gew.-% bezogen auf die Gesamtmasse an Verbundmaterial aus den Partikeln aus elementarem Kohlenstoff bestehen und der Rest des Gesamtkohlenstoffs, also 1,1 $\pm$ 0,1 Gew.-% aus der Beschichtung aus Pyrolysekohlenstoff, und zwar sowohl auf den Partikeln des gemischten Lithium-Metalloxids wie auch auf den Partikeln aus elementarem Kohlenstoff.

Die Aufgabe der vorliegenden Erfindung wird weiter durch ein Verfahren zur Herstellung eines erfindungsgemäßen Verbundmaterials gelöst, umfassend die Schritte des

a) Bereitstellens eines gemischten Lithium-Metalloxids, wobei das gemischte Lithium-Metalloxid i) ein dotiertes oder nicht-dotiertes Lithiumübergangsmetallphosphat ist, wobei das Übergangsmetall des Lithiumübergangsmetallphosphats Fe, Co, Mn oder Ni ist, oder ii) ein dotiertes oder nicht-dotiertes Lithiumtitanoxid ist,

b) Zugebens von i) einer Vorläuferverbindung von nicht kristallinem Pyrolysekohlenstoff sowie ii) von kristallinem elementarem Kohlenstoff , wobei der kristalline elementare Kohlenstoff kein VGCF (vapor grown carbon fiber) Kohlenstoff ist, und Herstellens einer Mischung,

c) Kompaktierens der Mischung aus Schritt b)

d) Erhitzens der kompaktierten Mischung bei einer Temperatur ≤ 750 °C und wobei nach dem Erhitzen das erhaltene Produkt vermahlen wird.

Wie vorstehend schon ausgeführt, kann das gemischte Lithium-Metalloxid zur Verwendung im erfindungsgemäßen Verfahren sowohl dotiert wie auch nicht-dotiert vorliegen. Alle vorstehend näher beschriebenen gemischten Lithium-Metalloxide sind im vorliegenden Verfahren einsetzbar.

Erfindungsgemäß ist es unwesentlich, wie die Synthese des gemischten Lithium-Metalloxids vor dem Einsatz in dem erfindungsgemäßen Verfahren durchgeführt wurde. D.h. das gemischte Lithium-Metalloxid kann sowohl im Rahmen einer Festkörpersynthese oder auch im Rahmen einer sog. Hydrothermalsynthese erhalten werden, oder auch über ein anderes beliebiges Verfahren.

Es hat sich allerdings gezeigt, dass gemischtes Lithium-Metalloxid, insbesondere ein Lithiumübergangsmetallphosphat, das auf hydrothermalem Wege gewonnen wurde, im erfindungsgemäßen Verfahren und im erfindungsgemäßen Verbundmaterial besonders bevorzugt eingesetzt wird, da dieses oftmals weniger Verunreinigungen aufweist als ein durch Festkörpersynthese gewonnenes.

Als Vorläuferverbindungen für den nicht kristallinen Pyrolysekohlenstoff eignen sich - wie vorstehend schon erwähnt - nahezu sämtliche organischen Verbindungen, die unter den Reaktionsbedingungen des erfindungsgemäßen Verfahrens zu Kohlenstoff umsetzbar sind.

Bevorzugt sind im Rahmen des erfindungsgemäßen Verfahrens insbesondere Kohlenhydrate, wie Laktose, Sucrose, Glucose, bzw. deren Mischungen, ganz besonders bevorzugt Laktose, Polymere wie beispielsweise Polystyrol-Butadien-Block-Copolymere, Polyethylen, Polypropylen, aromatische Verbindungen wie Benzol, Anthracen, Toluol, Perylen sowie Mischungen davon und alle weiteren dafür dem Fachmann an sich bekannten geeigneten Verbindungen.

Im Falle des Einsatzes von Kohlenhydraten werden diese in bevorzugten Ausführungsformen in Form einer wässrigen Lösung eingesetzt, bzw. in einer vorteilhaften Weiterbildung der vorliegenden Erfindung wird nach Vermischen des Kohlenstoffs mit dem gemischten Lithium-Metalloxid und/oder dem elementaren Kohlenstoff anschließend Wasser zugegeben, sodass eine Aufschlämmung erhalten wird, deren Weiterverarbeitung insbesondere aus produktionstechnischen und unter Emissionsgesichtspunkten gegenüber anderen Verfahrensvarianten bevorzugt ist.

Andere Vorläufermaterialien wie beispielsweise Benzol, Toluol, Naphthalin, Polyethylen, Polypropylen etc. können entweder direkt als Reinstoff bzw. in einem organischen Lösungsmittel eingesetzt werden.

Typischerweise wird im Rahmen des erfindungsgemäßen Verfahrens dabei eine Aufschlämmung gebildet, die anschließend vor Durchführung des Kompaktierens bei einer Temperatur von 100 bis 400°C getrocknet wird.

Das Kompaktieren der trockenen Mischung selbst kann als mechanische Kompaktion z.B. mittels eines Walzenkompaktors oder einer Tablettenpresse erfolgen, es kann aber auch als Roll-, Aufbau- bzw. Feuchtgranulation oder mittels jeder anderen dem Fachmann hierzu geeignet erscheinenden technischen Methode erfolgen.

Nach Kompaktieren der Mischung aus Schritt b), insbesondere der getrockneten Mischung, wird die Mischung wie schon vorstehend im Detail ausgeführt bei ≤ 750°C gesintert, wobei das Sintern bevorzugt unter Schutzgasatmosphäre erfolgt. Unter den gewählten Bedingungen entsteht aus den Vorläuferverbindungen für Pyrolysekohlenstoff kein Graphit, sondern eine die Partikel aus dem gemischten Lithium-Metalloxid und den elementaren Kohlenstoff teilweise oder zur Gänze bedeckende kontinuierliche Schicht aus nicht kristallinem Pyrolysekohlenstoff.

Bei höheren Temperaturen bei der Sinterung entsteht zwar immer noch über einen weiten Temperaturbereich Pyrolysekohlenstoff aus der Vorläuferverbindung, jedoch nimmt die Partikelgröße insbesondere der Partikel aus dem gemischten Lithium-Metalloxid durch Zusammensinterung zu, was die vorstehend geschilderten Nachteile mit sich bringt.

Aus produktionstechnischen Gründen wird bei der Sinterung bzw. Pyrolyse als Schutzgas Stickstoff verwendet, jedoch können auch alle weiteren bekannten Schutzgase wie beispielsweise Argon etc. sowie Mischungen davon verwendet werden. Ebenso kann auch technischer Stickstoff mit geringen Sauerstoffanteilen verwendet werden. Nach Erhitzen wird das erhaltene Produkt noch fein vermahlen, um anschließend als Ausgangsprodukt für die Herstellung einer Elektrode Verwendung zu finden.

Weiter wird die Aufgabe der vorliegenden Erfindung gelöst durch eine Elektrode für eine Sekundärlithiumionenbatterie enthaltend als Aktivmaterial das erfindungsgemäße Verbundmaterial. Durch die erhöhte Pressdichte des erfindungsgemäßen Verbundmaterials wird auch eine höhere Elektrodenaktivmassendichte in der Elektrode nach Formulierung erzielt. Typische weitere Bestandteile einer Elektrode sind neben dem Aktivmaterial noch Leitruße sowie ein Binder. Als Binder kann jeder dem Fachmann an sich bekannte Binder eingesetzt werden, wie beispielsweise Polytetrafluorethylen (PTFE), Polyvinylidendifluorid (PVDF), Polyvinylidendifluorid -Hexafluorpropylen Copolymere (PVDF-HFP), Ethylen-propylendien-ter-Polymere (EPDM), Tetrafluorethylen-Hexafluorpropylen Copolymere, Polyethylenoxide (PEO), Polyacrylnitrile (PAN), Polyacrylmethacrylate (PMMA), Carboxymethylcellulosen (CMC) deren Derivate und Mischungen davon.

Typische Anteile der einzelnen Bestandteile des Elektrodenmaterials sind im Rahmen der vorliegenden Erfindung bevorzugt 80 bis 90 Gewichtsteile an Aktivmasse, d.h. des erfindungsgemäßen Verbundmaterials, 10 bis 5 Gewichtsteile Leitkohlenstoff und 10 bis 5 Gewichtsteile Binder.

Durch das erfindungsgemäße Verbundmaterial, das schon Kohlenstoff enthält, kann insbesondere im vorliegenden Fall auch die Menge an Leitkohlenstoff in der Formulierung der Elektrode gegenüber den Elektroden des Standes der Technik deutlich verringert werden.

Die erfindungsgemäße Elektrode weist typischerweise eine Pressdichte von > 1,5 g/cm$^3$, bevorzugt > 2,0 g/cm$^3$, besonders bevorzugt > 2,2 g/cm$^3$ auf. Die spezifische Kapazität einer erfindungsgemäßen Elektrode beträgt dabei ca. 150 mA/g bei einer volumetrischen Kapazität von >200 mAh/cm$^3$, bevorzugter > 225 mAh/cm$^3$.

Je nach Art des gemischten Lithium-Metalloxids fungiert die Elektrode dabei entweder als Anode (bevorzugt im Falle von dotiertem oder nicht-dotiertem Lithiumtitanoxid, das allerdings in weniger bevorzugten Ausführungsformen auch je nach Art der Gegenelektrode als Kathode einsetzbar ist oder als Kathode (bevorzugt im Falle von dotiertem oder nicht dotiertem Lithiumübergangsmetallphosphat).

Die Aufgabe der vorliegenden Erfindung wird weiter durch eine Sekundärlithiumionenbatterie enthaltend eine erfindungsgemäße Elektrode als Kathode oder als Anode gelöst, so dass eine Batterie mit höherer Elektrodendichte (bzw. Dichte der Aktivmasse) erhalten wird, die eine höhere Kapazität als bisher bekannte Sekundärlithiumionenbatterien aufweisen, wodurch auch der Einsatz derartiger Lithiumionenbatterien insbesondere in Automobilen bei gleichzeitig kleineren Abmessungen der Elektrode bzw. der Batterie als Ganzes möglich ist.

In ganz besonders bevorzugten Weiterbildungen der vorliegenden Erfindung enthält die erfindungsgemäße Sekundärlithiumionenbatterie zwei erfindungsgemäße Elektroden, wovon eine als Anode das erfindungsgemäße Verbundmaterial enthaltend dotiertes oder nicht-dotiertes Lithiumtitanoxid umfaßt, die andere als Kathode dotiertes oder nicht dotiertes Lithiumübergangsmetallphosphat. Besonders bevorzugte Kathoden-Anodenpaare sind dabei LiFePO$_4$ // Li$_x$Ti$_y$O mit einer Einzelzellspannung von ca. 2,0 V, welche gut als Substitut für Blei-Säure-Zellen geeignet ist oder LiCo$_z$Mn$_y$Fe$_x$PO$_4$ // Li$_x$Ti$_y$O (wobei x, y und z wie vorstehend definiert sind) mit erhöhter Zellspannung und verbesserter Energiedichte.

Die Erfindung ist nachstehend anhand einiger Beispiele ausführlicher erläutert, die als nicht einschränkend für den Umfang der vorliegenden Erfindung verstanden werden sollen.

*1. Messmethoden*

Die Bestimmung der BET-Oberfäche erfolgte gemäß DIN 66134.

Die Bestimmung der Partikelgrößenverteilung erfolgte mittels Lasergranulometrie mit einem Malvern Mastersizer 2000 Gerät gemäß DIN 66133.

Die Bestimmung der Pressdichte und des Pulverwiderstands erfolgte simultan an einem Mitsubishi MCP-PD51 Tablettenpressgerät mit einem Loresta-GP MCP-T610 Widerstandsmeßgerät, welche in einer mit Stickstoff beaufschlagten Glovebox installiert sind zur Ausschaltung potentiell störender Effekte von Sauerstoff und Feuchte. Die hydraulische Betätigung der Tablettenpresse erfolgte über eine manuelle Hydraulikpresse Enerpac PN80-APJ (max. 10.000 psi / 700 bar).

Die Messungen einer Probe von 4 g erfolgten bei den vom Hersteller empfohlenen Einstellungen.

Der Pulverwiderstand berechnet sich anschließend gemäß der folgenden Gleichung:

$$\text{Pulverwiderstand } [\Omega/cm] = \text{Widerstand } [\Omega] \text{ x Dicke } [cm] \text{ x RCF}$$

Der RCF-Wert ist ein geräteabhängiger Wert und wurde vorliegend gemäß den Werteinstellungen des Herstellers mit 2,758 angegeben.

Die Pressdichte wird nach folgender Formel berechnet:

$$\text{Pressdichte } (g/cm^3) = \frac{\text{Masse der Probe } (g)}{\Pi \text{ x } r^2 \ (cm^2) \text{ x Dicke der Probe (in cm)}}$$

r = Radius der Probentablette
Übliche Fehlertoleranzen liegen bei maximal 3 %.

Beispiel 1: erfindungsgemäßes Verbundmaterial enthaltend Lithiumeisenphosphat

283,4 kg eines durch Hydrothermalsynthese (nach DE 103 53 266 A1) hergestellten frischen Filterkuchens aus Lithiumeisenphosphat (187,6 Trockengewicht bei 66,2 % Feststoffgehalt), 9,84 kg Laktose-Monohydrat entsprechend 52,5 g je kg Lithiumeisenphosphats bzw. ca. 1,1 Gew.-% resultierender Pyrolysekohlenstoff und 2,06 kg Flockengraphit SFG 6 der Firma Timcal entsprechend 1,1 Gew.-% bezogen auf das Lithiumeisenphosphat wurden in einem horizontalen 5501 Pflugscharmischer des Herstellers EMT mit Messerkopf vorgelegt. Anschließend wurden 80 Liter entionisiertes Wasser über einen internen Sprühkopf zugegeben und das Mischen über 15 min bei einer Umdrehungszahl von 140 UPM der horizontalen Welle und 1500 UPM des Messerkopfes durchgeführt.

Insgesamt ergibt sich ein Endkohlenstoffgehalt des gesamten Verbundmaterials von 2,2 Gew.-%, wobei das Gewichtsverhältnis von partikulärem kristallinem Kohlenstoff zu Pyrolysekohlenstoff etwa 1:1 beträgt.

Der verwendete Graphit SFG 6 wies einen $D_{90}$-Wert von < 16 μm auf. Alternativ kann auch ein sogenannter Kugelgraphit desselben Herstellers, Timcal KS, verwendet werden.

Der $D_{90}$-Wert der Partikel des elementaren Kohlenstoffs, ob Graphit, oder Kohlenstoffnanotubes oder Fullerenen bzw. VGCF-Kohlenstoff sollte bevorzugt nicht über 30 μm, bevorzugt nicht über 25 μm und ganz besonders bevorzugt nicht über 18 μm liegen.

Die Partikel können dabei die Form von Fasern, Flocken, Kugeln usw. aufweisen, ohne dass eine geometrische Form besonders bevorzugt ist.

Anschließend wurde die Aufschlämmung zur Vermeidung von Agglomeraten durch einen Probst & Class Micronisator / Konusmühle passiert und in einem Stork & Bowen Trockner mit Zerstäuberdüse bei einer Gaseintrittstemperatur von 350°C und einer Austrittstemperatur von 125°C bei einem Zerstäubungsdruck von 6,0 bar sprühgetrocknet. Das Trocknungsprodukt wurde anschließend mechanisch granuliert. Dazu wurde ein Alexanderwerk Walzenkompaktor WP 50N/75 bei einem Walzendruck von 35 bar und einer Walzendrehzahl von 8 U/min und einer Drehzahl der Zuführschnecke von 30 U/min verwendet. Die kompaktierten Proben wurden in einer horizontalen Siebrotormühle mit 2,5 mm Siebeinsatz granuliert und auf einem Schwingsieb mit 0,6mm Maschenweite vom Staubanteil getrennt.

Das so erhaltene hellgraue Granulat wurde anschließend in einem gasdichten Linn Kammerofen unter Schutzgas bei einer Temperatur von 750° C und bei einer Aufheiz- und Haltezeit von je 3h unter Stickstoff kalziniert.

Die anschließende Vermahlung des nun schwarzen Granulats erfolgte auf einer Alpine AFG 200 Mahlanlage mit 5,0 mm Mahldüsen bei einem Mahldruck von 2,5 bar.

Beispiel 2: erfindungsgemäßes Verbundmaterial enthaltend Lithiumtitanoxid

100 kg eines über Festkörpersynthese hergestellten kommerziell erhältlichen Lithiumtitanoxids Grade EXM 1037 der Phostech Lithium Inc., 3,0 kg Laktose-Monohydrat entsprechend 30 g je kg Lithiumtitanoxids bzw. ca. 1 % resultierender Pyrolysekohlenstoff und 1,0 kg Flockengraphit SFG 6 der Firma Timcal entsprechend 1,0 Gew.-% bezogen auf das Lithiumtitanoxid wurden ebenso wie in Beispiel 1 vorgelegt und weiter verarbeitet, wobei auf die Mischung diesmal 300 l entionisiertes Wasser aufgesprüht wurden, um eine sprühfähige Suspension mit 25 % Feststoffgehalt zu erhalten.

Insgesamt ergibt sich ein Endkohlenstoffgehalt des fertigen Verbundmaterials von ca. 2,0 Gew.-% bei einem Gewichtsverhältnis von partikulärem kristallinem Kohlenstoff zu Pyrolysekohlenstoff von etwa 1:1.

Vergleichsbeispiel 1

Als Referenz zum erfindungsgemäßen Verbundmaterial aus Beispiel 1 wurde das Lithiumeisenphosphat wie in Beispiel 1 behandelt, aber

a) in der ersten Variante ohne Graphitzusatz mit 105g Lactose-Monohydrat pro kg Lithiumeisenphosphat Trockenmasse vermischt, so dass der in der Kalzination resultierende Gesamtkohlenstoffgehalt von 2,2 Gew.-% vollständig als Pyrolysekohlenstoff vorliegt

b) in der zweiten Variante ohne Lactosezusatz mit 2,2 Gew.-% SFG 6 Graphit bezogen auf Lithiumeisenphosphat Trockenmasse vermischt, so dass die Gesamtkohlenstoffmenge von 2,2 Gew.-% vollständig als partikulärer kristalliner Kohlenstoff vorliegt.

Vergleichsbeispiel 2

Als Referenz zum erfindungsgemäßen Verbundmaterial aus Beispiel 2 wurde das Lithiumtitanoxid wie in Beispiel 1 behandelt, aber

a) in der ersten Variante ohne Graphitzusatz mit 120 g Lactose-Monohydrat pro kg Lithiumtitanoxid Trockenmasse vermischt, sodass der in der Kalzination resultierende Gesamtkohlenstoffgehalt von ca. 2,0 Gew.-% vollständig als pyrolytische Kohle vorliegt

b) in der zweiten Variante ohne Lactosezusatz mit 2,0 Gew.-% SFG 6 Graphit bezogen auf Lithiumtitanoxid Trockenmasse vermischt, so dass die Gesamtkohlenstoffmenge von 2,0 Gew.-% vollständig als partikulärer kristalliner Kohlenstoff vorliegt.

Die physikalischen Parameter der erfindungsgemäßen Verbundmaterialien aus Beispiel 1 und 2 sowie der Vergleichsbeispiele werden in Tabelle 1 gezeigt.

Tabelle 1

| Beispiel | Kohlenstoff [Gew.-%] | Verhältnis Kohlenstoff partikulär / pyrolytisch | d10 [$\mu$m] | d50 [$\mu$m] | d90 [$\mu$m] | BET [m$^2$/g] | Pulverwiderstand ($\Omega$/cm) | Pressdichte (g/cm$^3$) |
|---|---|---|---|---|---|---|---|---|
| **1** | **2,2** | **1:1** | **0,19** | **0,43** | **2,11** | **11,5** | **32,7** | **2,34** |
| VB 1a | 2,2 | 0:1 | 0,19 | 0,41 | 2,33 | 12,5 | 24,6 | 2,13 |
| VB 1b | 2,2 | 1:0 | 0,20 | 0,40 | 1,13 | 8,8 | >>100 | 1,60 |
| **2** | **2,0** | **1:1** | **0,90** | **2,14** | **4,37** | **6,4** | **21,8** | **2,39** |
| VB 2a | 2,0 | 0:1 | 0,92 | 2,25 | 4,61 | 7,0 | 10,4 | 2,17 |
| VB 2b | 2,0 | 1:0 | 0,91 | 1,96 | 3,86 | 3,0 | >>100 | 2,13 |

Wie aus Tabelle 1 ersichtlich ist, ergibt sich eine Erhöhung der Pressdichte von mehr als 10 %.

Beispiel 3

Bestimmung der Dichte des Aktivmaterials in einer Elektrode

Zur Bestimmung der Materialdichte des Aktivmaterials (d.h. des erfindungsgemäßen Verbundmaterials) wurden Elektroden (Dicke ca. 60 $\mu$m) mit einer Zusammensetzung 90 % Aktivmaterial, 5 Gew.-% Leitruß und 5 Gew.-% Binder hergestellt.

Dazu wurden

2,0 g 10%ige PVDF-Lösung in NMP (N-Methylpyrrolidon), 5,4 g NMP, 0,20 g Leitruß Super P Li (Fa. Timcal), 3,6 g erfindungsgemäßes Verbundmaterial aus Beispiel 1 bzw. Vergleichsmaterial aus Vergleichsbeispiel 1a in ein 50 ml Schraubdeckelglas eingewogen und für 5 Minuten bei 600 Upm gemischt, für 1 min mit einem Ultraschallfinger Hielscher UP200S dispergiert und anschließend nach Zugabe von 20 Glasperlen des Durchmessers 4 mm und verschließen des Glases bei einer Drehzahl von 10 UpM auf einem Rolltisch für mindestens 15 Stunden rotiert. Zur Elektrodenbeschichtung wurde die so erhaltene homogene Suspension mit einer Doctor-Blade Laborrakel mit 200 $\mu$m Spaltweite und einer Vorschubgeschwindigkeit von 20 mm/sec auf eine Aluminium-Trägerfolie aufgetragen. Nach Trocknen bei 80°C im Vakuumtrockenschrank wurden Elektroden von 13 mm Durchmesser aus der Folie ausgestochen und bei Raumtemperatur auf einer uniaxialen hydraulischen Laborpresse von Specac bei einer Last von 10 t für 60 sec mechanisch nachverdichtet. Zur Dichtebestimmung wurde das Netto-Elektrodengewicht aus dem Bruttogewicht und dem bekannten Flächengewicht der Trägerfolie bestimmt und die Netto-Elektrodendicke mit einer Mikrometerschraube abzüglich der bekannten Dicke der Trägerfolie bestimmt.

Die Aktivmassedichte in g/cm$^3$ in der Elektrode berechnet sich daraus über

$$(\text{Aktivmasseanteil in Elektrodenrezeptur } (90\%) * \text{Elektrodennettogewicht in g} / (\pi (0{,}65\text{cm})^2 * \text{Netto-Elektrodendicke in cm})$$

Als Wert für die Aktivmaterialdichte in der Elektrode wurden 2,00 g/cm für das Vergleichsmaterial aus Vergleichsbeispiel 1a und 2,17 g/cm für das erfindungsgemäße Verbundmaterial aus Beispiel 1 gefunden, woraus sich eine Verbesserung von 8 % ergibt.

**Patentansprüche**

1. Verbundmaterial, enthaltend bereichsweise mit einer Beschichtung aus nicht kristallinem Pyrolysekohlenstoff versehene Partikel eines gemischten Lithium-Metalloxids, wobei das gemischte Lithium-Metalloxid

   i) ein dotiertes oder nicht dotiertes Lithiumübergangsmetallphosphat ist, wobei das Übergangsmetall des Lithiumübergangsmetallphosphats Fe, Co, Mn oder Ni ist, oder
   ii) ein dotiertes oder nicht-dotiertes Lithiumtitanoxid ist sowie bereichsweise mit einer Schicht aus nicht kristallinem Pyrolysekohlenstoff versehene diskrete Partikel aus kristallinem elementarem Kohlenstoff, wobei der kristalline elementare Kohlenstoff kein VGCF (vapor grown carbon fiber) Kohlenstoff ist.

2. Verbundmaterial nach Anspruch 1, wobei das Übergangsmetall Fe ist.

3. Verbundmaterial nach Anspruch 1, wobei das dotierte oder nicht-dotierte Lithiumtitanoxid Lithiumtitanat $Li_4Ti_5O_{12}$ ist.

4. Verbundmaterial nach einem der vorhergehenden Ansprüche, wobei der kristalline elementare Kohlenstoff ein kristallines Allotrop des Kohlenstoffs ist ausgewählt aus Graphit, Kohlenstoffnanoröhrchen, Fullerenen, sowie Mischungen davon.

5. Verbundmaterial nach einem der vorhergehenden Ansprüche, wobei die Schichtdicke der Beschichtung aus Pyrolysekohlenstoff im Bereich von 2 bis 5 nm liegt.

6. Verbundmaterial nach Anspruch 5, wobei die Beschichtung aus nicht kristallinem Pyrolysekohlenstoff auf den gemischten Lithium-Metalloxidpartikeln und/oder den Partikeln aus kristallinem elementarem Kohlenstoff die gesamte Oberfläche dieser Partikel bedeckt.

7. Verbundmaterial nach einem der vorhergehenden Ansprüche, dessen Teilchengröße $D_{90} \leq 2{,}15$ $\mu$m beträgt und/oder dessen BET-Oberfläche $\leq 12$ m$^2$/g beträgt.

8. Verbundmaterial nach einem der vorhergehenden Ansprüche, dessen Pressdichte > 2,0 g/cm$^3$ beträgt und in einem Bereich von 2,0 bis 3,3 g/cm$^3$ liegt.

9. Verbundmaterial nach einem der vorhergehenden Ansprüche, dessen Pulverwiderstand < 35 $\Omega$/cm beträgt.

**10.** Verbundmaterial nach einem der vorhergehenden Ansprüche, dessen Gesamtkohlenstoffgehalt < 3 Gew.-% bezogen auf das Gesamtgewicht des Verbundmaterials beträgt.

**11.** Verfahren zur Herstellung eines Verbundmaterials nach einem der vorhergehenden Ansprüche umfassend die Schritte des

a) Bereitstellens eines gemischten Lithium-Metalloxids, wobei das gemischte Lithium-Metalloxid

i) ein dotiertes oder nicht dotiertes Lithiumübergangsmetallphosphat ist, wobei das Übergangsmetall des Lithiumübergangsmetallphosphats Fe, Co, Mn oder Ni ist, oder
ii) ein dotiertes oder nicht-dotiertes Lithiumtitanoxid ist

b) Zugebens von i)einer Vorläuferverbindung von nicht kristallinem Pyrolysekohlenstoff sowie ii)von kristallinem elementarem Kohlenstoff, wobei der kristalline elementare Kohlenstoff kein VGCF (vapor grown carbon fiber) Kohlenstoff ist, und Herstellen einer Mischung
c) Kompaktierens der Mischung aus Schritt b)
d) Erhitzens der kompaktierten Mischung bei einer Temperatur $\leq$ 750 °C und wobei nach dem Erhitzen das erhaltene Produkt vermahlen wird.

**12.** Verfahren nach Anspruch 11, wobei als Vorläuferverbindung von nicht kristallinem Pyrolysekohlenstoff ein Kohlenhydrat verwendet wird.

**13.** Verfahren nach Anspruch 12, wobei in Schritt b) eine wässrige Mischung in Form einer Aufschlämmung hergestellt wird und wobei vor Schritt c) die Aufschlämmung getrocknet wird.

**14.** Verfahren nach einem der vorhergehenden Ansprüche 11 bis 13, wobei das Erhitzen unter einer Schutzgasatmosphäre erfolgt.

**15.** Elektrode für eine Sekundärlithiumionenbatterie enthaltend als Aktivmaterial das Verbundmaterial gemäß einem der Ansprüche 1 bis 10.

**16.** Elektrode nach Anspruch 15 enthaltend 80 bis 90 Gewichtsteile Aktivmaterial, 10 bis 5 Gewichtsteile Leitkohlenstoff und 10 bis 5 Gewichtsteile Binder.

**17.** Elektrode nach Anspruch 15 oder 16, wobei die Dichte des Aktivmaterials der Elektrode > 1,9 g/cm$^3$ beträgt.

**18.** Sekundärlithiumionenbatterie umfassend eine Elektrode nach einem der Ansprüche 15 bis 17.

**19.** Sekundärlithiumionenbatterie umfassend eine Kathode, die als Aktivmaterial ein Verbundmaterial gemäß einem der Ansprüche 1 bis 10 enthaltend ein dotiertes oder nicht-dotiertes Lithiumübergangsmetallphosphat aufweist und eine Anode, die als Aktivmaterial ein Verbundmaterial gemäß einem der Ansprüche 1 bis 10 enthaltend ein dotiertes oder nicht-dotiertes Lithiumtitanat aufweist.

**Claims**

**1.** A composite material in places containing particles of a mixed lithium-metal oxide with a coating of non-crystalline pyrolysis carbon, wherein the mixed lithium-metal oxide

i) is a doped or undoped lithium-transition metal phosphate, wherein the transition metal of the lithium-transition metal phosphate is Fe, Co, Mn or Ni, or
ii) is a doped or undoped lithium-titanium oxide together with discrete particles of crystalline elemental carbon provided in places with a layer of non-crystalline pyrolysis carbon, wherein the crystalline elemental carbon is not VGCF (vapour-grown carbon fibre) carbon.

**2.** The composite material according to claim 1, wherein the transition metal is Fe.

**3.** The composite material according to claim 1, wherein the doped or undoped lithium-titanium oxide is lithium titanate

$Li_4Ti_5O_{12}$.

4. The composite material according to one of the preceding claims, wherein the crystalline elemental carbon is a crystalline allotrope of carbon selected from graphite, carbon nanotubes, fullerenes, and mixtures thereof.

5. The composite material according to one of the preceding claims, wherein the film thickness of the coating of pyrolysis carbon is in the range from 2 to 5 nm.

6. The composite material according to claim 5, wherein the coating of non-crystalline pyrolysis carbon on the mixed lithium-metal oxide particles and/or the particles of crystalline elemental carbon covers the entire surface of these particles.

7. The composite material according to one of the preceding claims, the $D_{90}$ particle size of which amounts to $\leq 2.15$ $\mu$m and/or the BET surface area of which amounts to $\leq 12$ $m^2/g$.

8. The composite material according to one of the preceding claims, the compressed density of which amounts to > 2.0 $g/cm^3$ and is in a range from 2.0 to 3.3 $g/cm^3$.

9. The composite material according to one of the preceding claims, the powder resistance of which amounts to < 35 $\Omega/cm$.

10. The composite material according to one of the preceding claims, the total carbon content of which amounts to < 3 wt.% based on the total weight of the composite material.

11. A method for producing a composite material according to one of the preceding claims comprising the steps of

> a) providing a mixed lithium-metal oxide, wherein the mixed lithium-metal oxide

>> i) is a doped or undoped lithium-transition metal phosphate, wherein the transition metal of the lithium-transition metal phosphate is Fe, Co, Mn or Ni, or
>> ii) is a doped or undoped lithium-titanium oxide

> b) adding i) a non-crystalline pyrolysis carbon precursor compound and ii) crystalline elemental carbon, wherein the crystalline elemental carbon is not VGCF (vapour-grown carbon fibre) carbon, and producing a mixture
> c) compacting the mixture from step b)
> d) heating the compacted mixture to a temperature of $\leq 750°C$ and wherein the resultant product is ground after heating.

12. The method according to claim 11, wherein a carbohydrate is used as the non-crystalline pyrolysis carbon precursor compound.

13. The method according to claim 12, wherein an aqueous mixture in the form of a suspension is produced in step b) and wherein the suspension is dried prior to step c).

14. The method according to one of preceding claims 11 to 13, wherein heating proceeds under a protective gas atmosphere.

15. An electrode for a secondary lithium ion battery containing the composite material according to one of claims 1 to 10 as active material.

16. The electrode according to claim 15 containing 80 to 90 parts by weight active material, 10 to 5 parts by weight conductive carbon and 10 to 5 parts by weight binder.

17. The electrode according to claim 15 or 16, wherein the density of the active material of the electrode amounts to > 1.9 $g/cm^3$.

18. A secondary lithium-ion battery comprising an electrode according to one of claims 15 to 17.

**19.** The secondary lithium-ion battery comprising a cathode which has a composite material according to one of claims 1 to 10 containing a doped or undoped lithium-transition metal phosphate as active material and an anode which has a composite material according to one of claims 1 to 10 containing a doped or undoped lithium titanate as active material.

**Revendications**

**1.** Matériau composite contenant des particules d'un oxyde mixte de lithium-métal, pourvues par zones d'un revêtement en carbone pyrolysé non cristallin, l'oxyde mixte de lithium-métal

i) étant un phosphate de lithium-métal de transition dopé ou non dopé, le métal de transition du phosphate de lithium-métal de transition étant le Fe, le Co, le Mn ou le Ni, ou

ii) étant un oxyde de lithium-titane dopé ou non dopé ainsi que des particules discrètes en carbone élémentaire cristallin et pourvues par zones d'une couche de carbone pyrolysé non cristallin, le carbone élémentaire cristallin n'étant pas un carbone VGCF (vapor grown carbon fiber - fibre de carbone obtenue par croissance en phase vapeur).

**2.** Matériau composite selon la revendication 1, le métal de transition étant du Fe.

**3.** Matériau composite selon la revendication 1, l'oxyde de lithium-titane dopé ou non dopé étant le titanate de lithium $Li_4Ti_5O_{12}$.

**4.** Matériau composite selon l'une quelconque des revendications précédentes, le carbone élémentaire cristallin étant un allotrope cristallin du carbone, choisi parmi le graphite, les nanotubes de carbone, les fullerènes ainsi que leurs mélanges.

**5.** Matériau composite selon l'une quelconque des revendications précédentes, l'épaisseur de couche du revêtement en carbone pyrolysé étant située dans la plage de 2 à 5 nm.

**6.** Matériau composite selon la revendication 5, le revêtement en carbone pyrolysé non cristallin sur les particules d'oxyde mixte de lithium-métal et/ou sur les particules en carbone élémentaire cristallin recouvrant la totalité de la surface de ces particules.

**7.** Matériau composite selon l'une quelconque des revendications précédentes, dont la grosseur de particule $D_{90}$ est $\leq 2,15\ \mu m$ et/ou dont la surface BET est $\leq 12\ m^2/g$.

**8.** Matériau composite selon l'une quelconque des revendications précédentes, dont la densité de pressage est $> 2,0$ $g/cm^3$ et se situe dans une plage de 2,0 à 3,3 $g/cm^3$.

**9.** Matériau composite selon l'une quelconque des revendications précédentes, dont la résistance de poudre est $< 35$ $\Omega/cm$.

**10.** Matériau composite selon l'une quelconque des revendications précédentes, dont la teneur totale en carbone est $< 3\%$ en poids, par rapport au poids total du matériau composite.

**11.** Procédé pour la préparation d'un matériau composite selon l'une quelconque des revendications précédentes, comprenant les étapes de :

a) préparation d'un oxyde mixte de lithium-métal, l'oxyde mixte de lithium-métal

i) étant un phosphate de lithium-métal de transition dopé ou non dopé, le métal de transition du phosphate de lithium-métal de transition étant le Fe, le Co, le Mn ou le Ni, ou

ii) étant un oxyde de lithium-titane dopé ou non dopé

b) addition de i) un composé précurseur de carbone pyrolysé non cristallin ainsi que ii) de carbone élémentaire cristallin, le carbone élémentaire cristallin n'étant pas un carbone VGCF (vapor grown carbon fiber) et préparation d'un mélange

c) compactage du mélange de l'étape b)

d) chauffage du mélange compacté à une température $\leq$ 750°C et le produit obtenu après le chauffage étant broyé.

**12.** Utilisation selon la revendication 11, un glucide étant utilisé comme composé précurseur de carbone pyrolysé non cristallin.

**13.** Procédé selon la revendication 12, un mélange aqueux sous forme d'une suspension étant préparé dans l'étape b) et la suspension étant séchée avant l'étape c).

**14.** Procédé selon l'une quelconque des revendications précédentes 11 à 13, le chauffage ayant lieu sous une atmosphère de gaz protecteur.

**15.** Électrode pour un accumulateur lithium-ion contenant comme matériau actif le matériau composite selon l'une quelconque des revendications 1 à 10.

**16.** Électrode selon la revendication 15, contenant 80 à 90 parties en poids de matériau actif, 10 à 5 parties en poids de carbone conducteur et 10 à 5 parties en poids de liant.

**17.** Électrode selon la revendication 15 ou 16, la densité du matériau actif de l'électrode étant > 1,9 g/cm$^3$.

**18.** Accumulateur lithium-ion comprenant une électrode selon l'une quelconque des revendications 15 à 17.

**19.** Accumulateur lithium-ion, comprenant une cathode, qui présente comme matériau actif un matériau composite selon l'une quelconque des revendications 1 à 10 contenant un phosphate de lithium-métal de transition dopé ou non dopé et une anode, qui présente comme matériau actif un matériau composite selon l'une quelconque des revendications 1 à 10 contenant un titanate de lithium dopé ou non dopé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5910382 A, von Goodenough
- WO 02099913 A1
- EP 1195838 A2
- JP 2002151082 A
- DE 10353266 A1
- EP 1193784 A1
- EP 1193785 A1
- EP 1193786 A1
- EP 1049182 B1
- WO 2008067677 A1
- US 5545468 A
- EP 1722439 A1
- DE 10319464 A1
- US 20070202036 A1
- US 6645673 B2

**In der Beschreibung aufgeführte Nicht-Patentliteratur**

- *Journal of Power Sources,* 2003, vol. 119-121, 247-251
- **BRUCE et al.** *Angew.Chem.Int.Ed.,* 2008, vol. 47, 2930-2946
- **ERNST, F.O. et al.** *Materials Chemistry and Physics,* 2007, vol. 101 (2-3), 372-378
- **KALBAC, M. et al.** *Journal of Solid State Electro-chemistry,* 2003, vol. 8 (1), 2-6
- **S. HUANG et al.** *J. Power Sources,* 2007, vol. 165, 408-412